(19) Europäisches Patentamt
European Patent Office
Office européen des brevets

(11) **EP 2 821 683 B1**

(12) **EUROPEAN PATENT SPECIFICATION**

(45) Date of publication and mention
of the grant of the patent:
**09.01.2019 Bulletin 2019/02**

(21) Application number: **14173398.0**

(22) Date of filing: **23.06.2014**

(51) Int Cl.:
*F16K 31/06* (2006.01)     *G05D 16/00* (2006.01)

(54) **Pressure regulating valve**

Druckregelventil

Soupape de régulation de pression

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2013 IT PR20130052**

(43) Date of publication of application:
**07.01.2015 Bulletin 2015/02**

(73) Proprietor: **Walvoil S.p.A.**
**42124 Reggio Emilia (IT)**

(72) Inventor: **SCALABRINI, Gabriele**
**42124 REGGIO EMILIA (IT)**

(74) Representative: **Fanzini, Valeriano et al**
**Ing. Dallaglio S.r.l.**
**Via Mazzini, 2**
**43121 Parma (IT)**

(56) References cited:
**EP-A1- 1 528 305      EP-A2- 0 987 444
WO-A1-2011/076484      WO-A1-2012/085463**

**Description**

FIELD OF APPLICATION OF THE INVENTION

The present document refers to the field of pressure regulating valves of cartridge type, in particular to the proportional pressure regulating valves with direct actuation and having cone shutter, in which there is a regulation of the pressure on the port of the valve directly proportional to the control current of the electromagnetic actuation.

The regulating valve creates a pressure upstream of the sealing edge, proportional to the current with which the solenoid is power supplied; such solenoid generates the electromagnetic force that is transmitted on the shutter by means of the thrust of the movable core present within the electromagnetic actuator.

STATE OF THE ART

Widespread in the prior art are valves constituted by an electromagnetic actuation controlled with a current signal, generating an electromagnetic force directly proportional to the control current. Said electromagnetic force is directly transmitted by means of a rigid thrust element or alternatively by means of an intermediate elastic element such as a spring, on a cone-like movable shutter which is arranged in a sealing fashion on a sealing seat.

This shutter prevents the passage of the fluid until the pressure that is generated is sufficient for raising the shutter in order to make the oil pass; the opening pressure depends on the force acting on the shutter and on the sealing area of the seat based on this law:

$$p = F/A$$

As is known, at a section traversed by a fluid, such as the outflow area between the cone and the sealing seat in the direct pressure regulating valve, a pressure jump is generated and in particular, locally at the necking, there is a considerable pressure decrease due to the acceleration of the fluid. Such phenomenon can thus generate cavitation at the outflow area which can cause instability on the shutter and consequently on the valve, especially if the slope of the curve Q/Dp is limited.

In order to overcome this phenomenon, it is generally sought to create a minimum of counter-pressure at the outlet port of the valve with:

- a fixed throttle, such as a calibrated orifice;
- a check/counter-pressure valve inserted in the system in series with the pressure regulating valve.

The counter-pressure generated with these two solutions is always added together with the pressure generated on the port in inlet.

A drawback of the fixed throttle is that the counter-pressure generated increases suddenly according to quadratic law as a function of the traversing flow rate, consequently negatively affecting the characteristic curve Q-Dp of the valve; in addition this component is more greatly affected by the viscosity of the fluid and introduces a greater variability of the regulated pressure on the port 1.

Another example of the prior art is the document WO2012/085463 which relates to a tubular valve for adjusting the compression ratio of an engine with a variable compression ratio.

WO2011/076484 discloses a proportional pressure regulating valve according to the preamble of claim 1.

The solution with check valve instead has a linear increase that depends on the spring used for generating the force that presses on the shutter. With respect to the fixed throttle, it has an improved characteristic Q-Dp and an improved repeatability, but on the other hand it has greater size and is in fact an additional component that must be installed within the system/circuit.

Object of the present invention is to solve the above-lamented drawbacks with a proportional pressure regulating valve of cartridge type, with cone seal, which integrates check valve in order to optimize the stability of the valve, maintaining an acceptable characteristic curve Q-Dp so as to have a work flow rate greater than that generally stated for this valve type, and simultaneously limited leakage since the cone seal is in any case present.

Specifically, the pressure regulating valve has a check valve integrated constituted by a movable ring shutter and a thrust spring guided internally on the cartridge, adapted to generate a thrust force on the movable ring shutter bringing it to seal against the fixed seat in a manner so as to create a counter-pressure downstream of the cone-like shutter within the chamber present inside the valve.

This integrated check valve also has the function of preventing the oil present inside the valve from leaking from the chamber in communication with the relative port, and thus preventing air from entering which is capable of compromising the stability of the valve.

Said objects and advantages are all achieved by the pressure regulating valve, object of the present finding, which is characterized with regard to that provided in the below-reported claims.

BRIEF DESCRIPTION OF THE FIGURES

These and other characteristics will be clearer from the following description of several embodiments, illustrated as a merely non-limiting example in the enclosed drawing tables.

- Figure 1: Illustrates the section of one embodiment of the direct proportional regulating valve with cone seal with check valve in series, characteristic of the prior art.

- Figure 2: Illustrates the section of the embodiment of the proportional pressure regulating valve, object of the finding.

- Figure 3: Illustrates the detail section in which the check valve is represented that is the object of the invention, integrated in the proportional pressure regulating valve of figure 2.

## DESCRIPTION OF THE FINDING

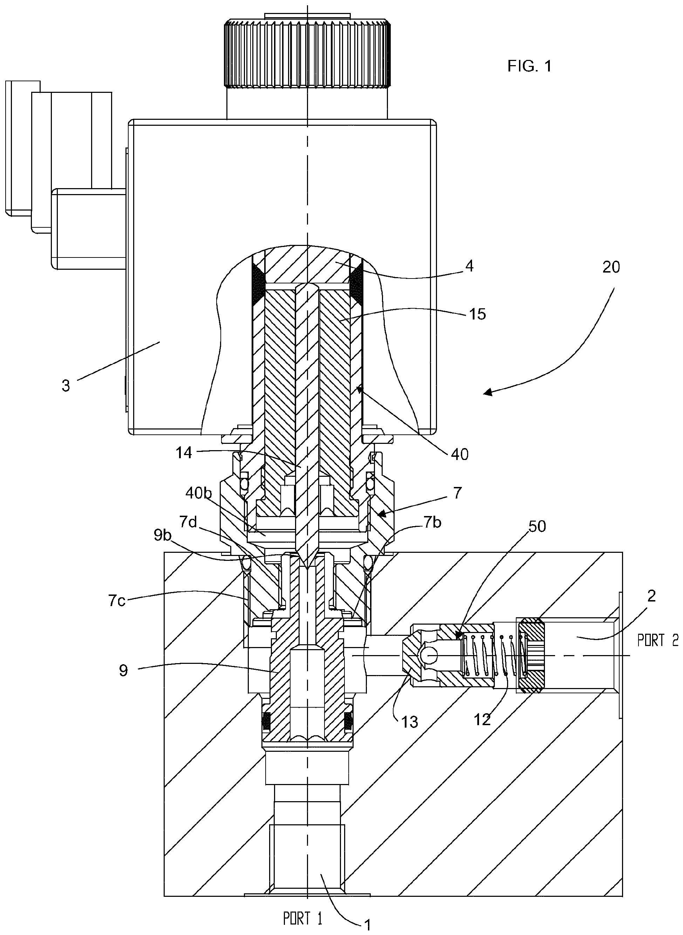

With reference to figure 1, the characteristics and modes of functioning of the embodiment of the proportional pressure regulating valve already known in the prior art will now be described.

The prior art valve 20 is provided with an electromagnetic actuator defined by the tube 40. When the coil 3 is power supplied with a specific and controlled control current, the force of attraction of the movable core 4 towards the fixed core 15 is generated.

The movable core 4 is free to axially slide inside the tube 40 and thus transmits a force on the shutter 14.

Said force can be transmitted to the shutter 14 by means of direct contact with the movable core 4, as represented in figure 1, or through an interposed elastic element, such as possibly a spring. This elastic element transmits to the shutter 14 the force generated by the electromagnetic actuation and in addition to transmitting the electromagnetic force, it has the task of damping the vibrations induced by the current oscillation, termed dithering, generally present on the control current of the proportional electromagnetic actuators. The tube 40 is fixed by means of a thread to the intermediate bushing 7.

Said intermediate bushing 7 is constituted on the upper part by the thread to which the previously described tube 1 is fixed.

The intermediate bushing 7 is constituted in the lower part by an external thread used for fixing the valve 20 within the cavity where it will come to work; still in the lower part, it also has an internal thread on which the cartridge 9 is screwed and fixed. The cartridge 9 is the component on which the sealing seat 9b is obtained, in which the shutter 14 is arranged in a sealing fashion and on which the ports and the ducts are made for the passage of the fluid.

When the shutter 14 is thrust by the electromagnetic force against the sealing seat 9b of the cartridge 9, the passage of the fluid from the port 1 towards the port 2 is blocked until a pressure is reached that is adapted to move the shutter 14; once the shutter 14 has been raised, the port 1 and the port 2 are placed in communication through the milling or possibly through the holes present in proximity to the upper thread of the cartridge 9.

The solution in the figure regards that with check valve, identified with 50 in the figure, arranged on the outlet port 2. The counter-pressure generated has an increase that depends on the spring 12 used for generating the force that acts on the shutter 13; as seen, such solution has greater size and in fact is an additional component that must be installed inside the system/circuit.

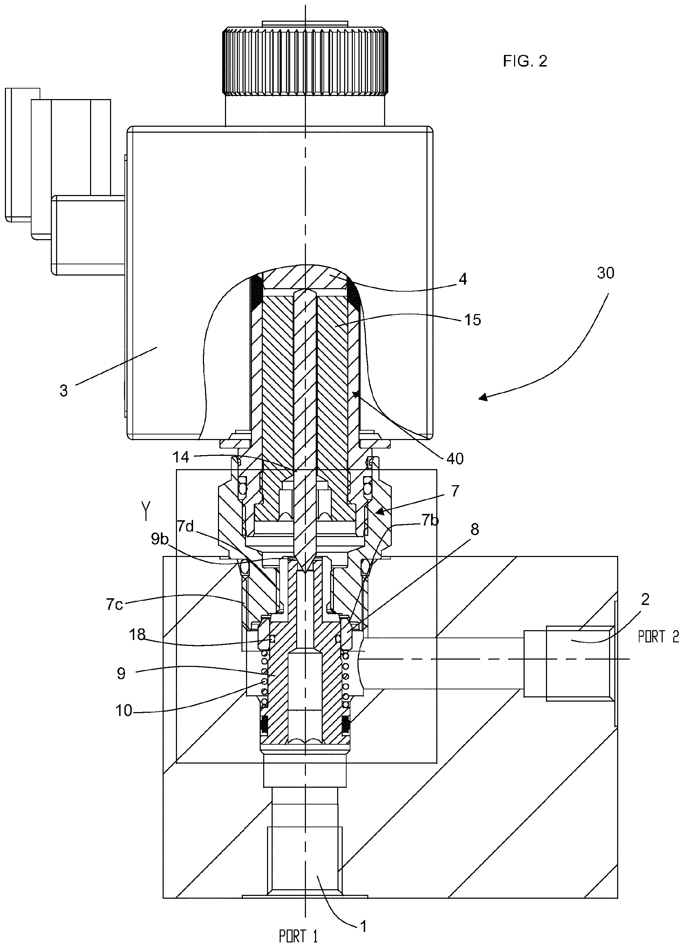

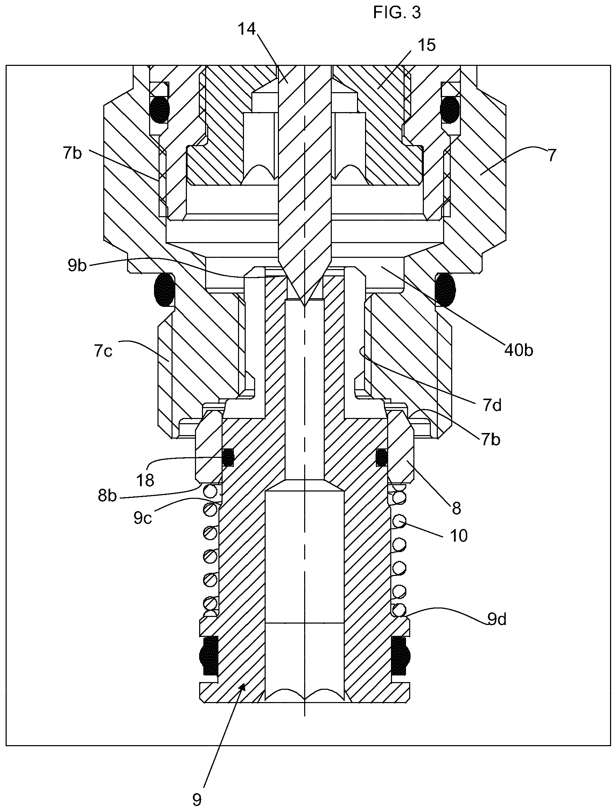

With reference to figures 2 and 3, the proportional pressure regulating valve is illustrated which is the object of the present finding.

The valve 30, object of the finding, comprises an electromagnetic actuator defined by the tube 40. When the coil 3 is power supplied with a specific and controlled control current, it generates the force of attraction of the movable core 4 towards the fixed core 15.

The movable core 4 is free to axially slide within the tube 40 and thus transmits a force on the shutter 14.

Said force can be transmitted to the shutter 14 by means of direct contact with the movable core 4 as represented in figure 2, or through an interposed elastic element such as possibly a spring. This elastic element transmits to the shutter 14 the force generated by the electromagnetic actuation, and in addition to transmitting the electromagnetic force it has the task of damping the vibrations induced by the current oscillation termed dithering, generally present on the control current of the proportional electromagnetic actuators.

The tube 1 is fixed by means of a thread to the intermediate bushing 7.

Said intermediate bushing 7 is constituted on the upper part by the thread, to which the previously described tube 40 is fixed.

The intermediate bushing 7 is constituted in the lower part by an external thread used for fixing the valve 30 inside the cavity where it will come to work; still in the lower part, it also has an internal thread on which the cartridge 9 is screwed and fixed. The cartridge 9 is the component on which the sealing seat 9b is obtained, in which the shutter 14 is arranged in a sealing fashion and on which the ports and the ducts are made for the passage of the fluid.

With respect to the valve 20 of the prior art, now the valve 30 integrates a check valve - so as to act itself as one - in order to block the passage of the fluid towards the port 2 up to the generation, in the chamber 40b, of a specific pressure value that is summed to the pressure regulated by the shutter 14 on the port 1.

For the purpose of creating the integrated check valve function, the valve 30 comprises

- a ring shutter 8 arranged in a manner so as to make a seal on the edge 7b of the intermediate bushing 7 and

- a spring 10, inserted outside and coaxial with respect to the cartridge 9; the spring 10 being suitably compressed in order to generate a specific force on the shutter 8, so as to obtain the counter-pressure required to stabilize the valve 30.

In addition to generating a counter-pressure downstream of the sealing edge of the cartridge 9, i.e.

within the chamber 40b, the above has other advantages:

- it prevents the oil present within the electromagnetic actuator 1 from leaking, allowing air to enter and remain trapped inside the valve, negatively affecting the operation and stability of the pressure regulating valve;
- the proportional pressure regulating valve and the check valve are actually a single component; as made, the valve 30 enters into a standard cavity, with reduction of the size and components.

In other words, the regulating valve 30 incorporates and performs both the regulating valve and check valve function.

Said shutter 8 is annular-shaped and is free to slide on the cartridge 9 until it reaches a mechanical end stop 9c obtained on the cartridge 9 itself.

On the lower side 8b of this shutter 8, the spring 10 acts which is internally guided on the cartridge and is abutted against the flat surface 9d of an abutment obtained on the cartridge 9 itself.

On the cartridge 9, the seat is obtained for a gasket 18 which generates a seal between the internal surface of the shutter 8 and the cartridge 9.

The force generated by the spring 10 on the shutter 8 defines the counter-pressure that has been established in the chamber 40b of the actuator 40 and which is added to the pressure regulated by the shutter 14 on the sealing seat 9b of the valve.

The shutter 8, the spring 10 and the gasket 18 are comprised in the overall size of the cavity already used for the analogous valves disclosed in the prior art, and the use thereof does not preclude the need to employ a dedicated cavity for the present valve.

The gasket 18 can be omitted in the case of coupling clearance between the shutter 8 and the guide surface of the cartridge 9 is such to allow a low leakage and in any case such to allow obtaining the counter-pressure required in the chamber 40b.

In an alternative embodiment, the pre-load of the spring 10 can be regulated by screwing or unscrewing the cartridge 9 on the bushing 7 in a manner so as to obtain the desired pressure in the chamber 40b.

The present valve 30 can also be used as pilot stage for a piloted pressure regulating valve.

**Claims**

1.  A proportional pressure regulating valve (30) of cartridge type, with direct actuation and having an axially slidable cone-like shutter (14) that can be positioned with the conical lower end thereof on a sealing seat (9b) on the cartridge (9) so as to control the passage of the fluid between a first port (1) and a second port (2) of the regulating valve; said cartridge (9) being integral with an intermediate bushing (7) on which an actuator (40) is fixed in turn; the regulating valve (30) being **characterized in that** it performs both the regulating valve and the check valve function; said check valve function is adapted to prevent the passage of the fluid towards the second port (2) up to the generation of a pressure value that is summed to the pressure regulated on the first port (1) by the cone-like shutter (14), wherein the proportional pressure regulating valve (30) comprises an integrated check valve comprising an annular-shaped ring shutter (8) free to slide on the cartridge (9) until it reaches a mechanical end stop (9C) obtained on the cartridge (9) itself, the annular-shaped ring shutter being arranged in a manner so as to make a seal on the edge (7b) of the intermediate bushing (7); on the lower side (8b) of the ring shutter (8), a spring (10) inserted outside and coaxial with respect to the cartridge (9) is internally guided on the cartridge (9) and is abutted against a flat surface (9d) of an abutment obtained on the cartridge 9 itself; the spring (10) being compressed in order to generate a force on the ring shutter (8), so as to obtain a counter-pressure and stabilize the valve (30).

2.  Proportional pressure regulating valve according to claim 1, **characterized in that** on the cartridge (9), a seat is obtained for a gasket (18) which generates a seal between the internal surface of the ring shutter (8) and the cartridge (9).

3.  Proportional pressure regulating valve according to claim 1, **characterized in that** said force generated by the spring (10) on the ring shutter (8) defines the counter-pressure which occurs in a chamber (40b) of the actuator (40) and which is summed to the pressure regulated by the cone-like shutter (14) on the sealing seat (9b).

4.  Proportional pressure regulating valve according to claim 2, **characterized in that** the gasket (18) is omitted in case the coupling clearance between the ring shutter (8) and the guide surface of the cartridge (9) is such to allow low leakage and such to allow obtaining the counter-pressure required in the chamber (40b).

5.  Proportional pressure regulating valve according to claim 1 and 2, **characterized in that** the pre-load of the spring (10) may be regulated by fastening or unfastening the cartridge (9) on the bushing (7) so as to obtain the pressure desired in the chamber (40b).

6.  Proportional pressure regulating valve according to claim 1, **characterized in that** said proportional pressure regulating valve is adapted to be used as a pilot stage for a proportional piloted pressure regulating valve.

7. Proportional pressure regulating valve according to claim 1, **characterized in that** the actuator (40) is an electromagnetic actuator, wherein a control current used for controlling a coil (3), generates a force which is transmitted through a movable core (4) of the electromagnetic actuator (40) on the cone-like shutter (14) directly or through a suitably guided interposed elastic element.

8. Proportional pressure regulating valve according to claim 7, **characterized in that** the force transmitted to the cone-like shutter (14) to regulate the pressure on the first port (1) may be generated by a compression spring and that the electromagnetic actuator subject to pulling, according to the control current used for controlling the coil (3), generates a force on the movable core (4) which opposes the force generated by said spring, thus reducing the pressure regulated on the first port (1).

**Patentansprüche**

1. Proportional-Druckregelventil (30) vom Patronentyp, mit einem Direktantrieb und mit einem axial verschiebbaren konischen Schott, das mit seinem konischen unteren Ende auf einem Dichtsitz (9b) an der Patrone (9) positioniert werden kann, um so den Durchgang des Fluides zwischen einer ersten Öffnung (1) und einer zweiten Öffnung (2) des Regelventils, zu regeln; wobei die genannte Patrone (9) ist integral mit einer Zwischenbuchse (7) ausgebildet, an der wiederum ein Aktuator (40) befestigt ist; wobei das Regelventil (30) zeichnet sich dadurch aus, dass es sowohl als Regelventil als auch als Kontrollventil wirkt; wobei die genannte Kontrollventilfunktion ist angepasst, um den Durchfluss des Fluides in Richtung der zweiten Öffnung (2) zu verhindern, bis ein Druckwert erzeugt wird, der zu dem Druck addiert wird, der an der ersten Öffnung (1) durch den konischen Schott geregelt ist, wobei das Proportional-Druckregelventil umfasst ein integriertes Kontrollventil, das aus einem ringförmigen Schott (8) besteht, der frei auf der Patrone (9) gleitet, bis er einen mechanischen Endanschlag (9C) erreicht, der an der Patrone (9) selbst erhalten wird, wobei der ringförmiger Schott derart angeordnet ist, dass er eine Dichtung an der Kante (7b) der Zwischenbuchse (7) bildet; wobei auf der unteren Seite (8b) des ringförmigen Schotts eine Feder (10) außen eingesetzt und innen koaxial in Bezug auf die Patrone (9) an der Patrone (9) geführt ist, wobei sie gegen eine flache Oberfläche (9b) an einem Anschlag geschlagen wird, der an der Patrone 9 selbst erhalten wird; wobei die Feder (10) wird zusammengedrückt, um eine Kraft auf den ringförmigen Schott (8) zu erzeugen, um so einen Gegendruck zu erhalten und das Ventil (30) zu stabilisieren.

2. Proportional-Druckregelventil nach Anspruch 1, **dadurch gekennzeichnet, dass** an der Patrone (9) ein Sitz für eine Dichtung (18) erhalten wird, die eine Abdichtung zwischen der Innenfläche des ringförmigen Schotts und der Patrone (9) erzeugt.

3. Proportional-Druckregelventil nach Anspruch 1, **dadurch gekennzeichnet, dass** die genannte von der Feder (10) an dem ringförmigen Schott erzeugte Kraft den Gegendruck definiert, der in einer Kammer (40b) des Aktuators (40) gebildet wird und der zu dem Druck addiert wird, der durch den kegelförmigen Schott (14) an den Sitz (9b) der Dichtung reguliert wird.

4. Proportional-Druckregelventil nach Anspruch 2, **dadurch gekennzeichnet, dass** die Dichtung (18) in dem Fall entfällt, in dem das Spiel der Kupplung zwischen dem ringförmigen Schott (8) und der Führungsfläche der Patrone (9) derart ausgebildet ist, dass es einen geringen Verlust ermöglicht und derart ausgebildet ist, dass es den in der Kammer (40b) erforderlichen Gegendruck erhält.

5. Proportional-Druckregelventil nach Anspruch 1 und 2, **dadurch gekennzeichnet, dass** die Vorspannung der Feder (10) durch Fixieren oder Lösen der Patrone (9) an der Buchse (7) einstellbar ist, um den gewünschten Druck in der Kammer (40b) zu erhalten.

6. Proportionaldruckregelventil nach Anspruch 1, **dadurch gekennzeichnet, dass** das genannte Proportionaldruckregelventil als Vorsteuerstufe für ein vorsteuerbares Proportionaldruckregelventil verwendbar ist.

7. Proportionaldruckregelventil nach Anspruch 1, **dadurch gekennzeichnet, dass** das Aktuator (40) ein elektromagnetisches Aktuator ist, bei dem ein zur Regelung einer Spule (3) verwendeter Steuerstrom eine Kraft erzeugt, die durch einen beweglichen Kern (4) des elektromagnetischen Aktuators (40) an den konischen Schott (14), direkt oder mittels eines geeignet geführten zwischengelagerten elastischen Elements, übertragen wird.

8. Proportionaldruckregelventil nach Anspruch 7, **dadurch gekennzeichnet, dass** die auf den konischen Schott übertragene Kraft zur Regelung des Drucks auf die erste Öffnung (1) mittels einer Druckfeder erzeugbar ist und dass das elektromagnetische Aktuator folgend einer Zugkraft in Übereinstimmung mit dem Steuerstrom, der zur Steuerung der Spule (3) verwendet wird, eine Kraft auf den beweglichen Kern (4) erzeugt, die der von der genannten Feder erzeugten Kraft entgegengesetzt ist, wodurch der an der ersten Öffnung (1) eingestellte Druck verringert wird.

**Revendications**

1. Vanne de régulation de pression proportionnelle (30) du type à cartouche, à entraînement direct et avec une cloison (14) conique de transport coulissante axialement, qui peut être positionnée à son extrémité inférieure conique sur un siège d'étanchéité (9b) sur la cartouche (9) afin de réguler le passage d'un fluide entre une première ouverture (1) et une deuxième ouverture (2) de la vanne de régulation; ladite cartouche (9) étant solidaire d'une bague intermédiaire (7) sur laquelle est fixé à son tour un actionneur (40); la vanne de régulation (30) étant **caractérisée par le fait qu'**elle agit à la fois comme une vanne de régulation et une vanne de contrôle; ladite fonction de vanne de contrôle est adaptée pour empêcher le passage du fluide vers la deuxième ouverture (2) jusqu'à la génération d'une valeur de pression qui est ajoutée à la pression régulée sur la première ouverture (1) par la cloison conique (14), la vanne de régulation de pression proportionnelle (30) comprend une vanne de contrôle intégrée constituée d'une cloison (8) en forme d'anneau libre de glisser sur la cartouche (9) jusqu'à atteindre une butée mécanique finale (9C) obtenue sur la cartouche (9) elle-même, la cloison en forme d'anneau étant disposée de manière à former un joint d'étanchéité sur le bord (7b) de la bague intermédiaire (7); sur le côté inférieur (8b) de la cloison annulaire (8), un ressort (10) est inséré extérieurement et coaxiale par rapport à la cartouche (9) et est guidée intérieurement sur la cartouche (9), en frappant contre une surface plate (9d) sur une butée obtenue sur la cartouche (9) elle-même; le ressort (10) est comprimé afin de générer un effort sur la cloison annulaire (8), de manière à obtenir une contre-pression et à stabiliser la vanne.

2. Vanne de régulation de pression proportionnelle selon la revendication 1, **caractérisée en ce que** sur la cartouche (9) un siège est obtenu pour un joint d'étanchéité (18) qui génère un joint d'étanchéité entre la surface interne de la cloison annulaire (8) et la cartouche (9).

3. Vanne de régulation pression proportionnelle selon la revendication 1, **caractérisée en ce que** ladite force générée par le ressort (10) sur la cloison annulaire (8) définit la contre-pression qui est formée dans une chambre (40b) de l'actionneur (40) et qui est ajoutée à la pression régulée par la cloison conique (14) sur le siège d'étanchéité (9b).

4. Vanne de régulation de pression proportionnelle selon la revendication 2, **caractérisée en ce que** le joint (18) est omis dans le cas où le jeu de couplage entre la cloison annulaire (8) et la surface de guidage de la cartouche (9) est tel qu'il permet une faible perte et est tel pour permettre d'obtenir la contre-pression requise dans la chambre (40b).

5. Vanne de régulation de pression proportionnelle selon les revendications 1 et 2, **caractérisée en ce que** la charge préliminaire du ressort (10) peut être régulée en fixant ou en libérant la cartouche (9) sur la bague (7) afin d'obtenir la pression souhaitée dans la chambre (40b) .

6. Vanne de régulation de pression proportionnelle selon la revendication 1, **caractérisée en ce que** ladite vanne de régulation de pression proportionnelle est adaptée pour être utilisée comme étage pilote pour une vanne de régulation de pression proportionnelle pilotée de manière proportionnelle.

7. Vanne de régulation de pression proportionnelle selon la revendication 1, **caractérisée en ce que** l'actionneur (40) est un actionneur électromagnétique, dans lequel un courant de commande utilisé pour commander une bobine (3) génère une force qui est transmise à travers un noyau (4) mobile de l'actionneur électromagnétique (40) par rapport à la cloison conique (14), directement ou au moyen d'un élément élastique interposé et guidé de manière appropriée.

8. Vanne de régulation de pression proportionnelle selon la revendication 7, **caractérisée en ce que** la force transmise à la cloison (14) conique afin de réguler la pression sur la première ouverture (1) peut être générée au moyen d'un ressort de compression et que l'actionneur électromagnétique est suivie d'une traction, en fonction du courant de commande utilisé pour commander la bobine (3), et génère sur le noyau mobile (4) une force opposée à la force générée par ledit ressort, réduisant ainsi la pression ajustée sur la première ouverture (1).

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012085463 A
- WO 2011076484 A